Europäisches Patentamt

(19) European Patent Office

Office européen des brevets

(11) Veröffentlichungsnummer: **0 202 479**
**B1**

## (12) EUROPÄISCHE PATENTSCHRIFT

(45) Veröffentlichungstag der Patentschrift :
19.07.89

(51) Int. Cl.⁴: **H 01 G 4/30**

(21) Anmeldenummer : 86105376.7

(22) Anmeldetag : 18.04.86

(54) Elektrischer Kondensator und Verfahren zu seiner Herstellung.

(30) Priorität : 13.05.85 DE 3517243

(43) Veröffentlichungstag der Anmeldung :
26.11.86 Patentblatt 86/48

(45) Bekanntmachung des Hinweises auf die Patenterteilung : 19.07.89 Patentblatt 89/29

(84) Benannte Vertragsstaaten :
AT BE CH DE FR GB IT LI NL SE

(56) Entgegenhaltungen :
DE–A– 1 940 036
DE–A– 2 541 111
FR–A– 2 497 393
US–A– 3 444 436

(73) Patentinhaber : Siemens Aktiengesellschaft Berlin und München
Wittelsbacherplatz 2
D-8000 München 2 (DE)

(72) Erfinder : Behn, Reinhard, Dipl.-Phys.
Frasdorferstrasse 6 d
D-8000 München 90 (DE)
Erfinder : Utner, Ferdinand
Roter Brachweg 99
D-8400 Regensburg (DE)

**Beschreibung**

Gegenstand des Patentes gemäß EP-A2 0 144 857 ist ein elektrischer Kondensator aus einem verfestigten Stapel von mit je einer Metallschicht als Belegung versehen, aneinandergeschichteten Dielektrikumslagen, bei dem die Belegungen von Lage zu Lage abwechselnd zu den Enden von zwei Vorsprüngen reichen, die durch einen Einschnitt entstanden sind, der in Richtung der Dicke des Stapels und etwa in der Mitte einer Seite desselben verläuft, bei dem ferner die von den Enden der Vorsprünge im verfestigten Stapel gebildeten Flächen mit zur Kontaktierung dienenden Metallschichten versehen sind, die die gegenpoligen Belegungen miteinander verbinden, mit den Merkmalen :

a) die Dielektrikumslagen bestehen aus Kunststoffolien,

b) die Belegungen bestehen aus regenerierfähig dünnen Schichten aus Ventilmetall und bedecken je eine Fläche der Dielektrikumslagen praktisch bis zu den Rändern an den Längsseiten sowie bis zu beiden Seiten der Vorsprünge und gegebenenfalls bis zum Rand der oberen Schmalseite des Stapels, der der den Einschnitt enthaltenen Schmalseite gegenüberliegt,

c) alternierend von Dielektrikumslage zu Dielektrikumslage sind die Vorsprünge mit metallfreien Isolierstreifen versehen, wobei die Tiefe des Einschnittes entweder größer ist als die Breite des Restmetallstreifens oder vorzugsweise mit den inneren Rändern der Isolierstreifen zusammenfällt oder über diese Ränder hinaus in den Stapel hineinreicht,

d) die die gegenpoligen Belegungen auf den Flächen miteinander verbindenden Metallschichten sind durch Metallspritzen hergestellt,

e) der Stapel besitzt auf seiner Unter- und/oder Oberseite mindestens jeweils eine kapazitiv nicht wirksame Decklage.

Gegenstand des eingangs genannten Patentes gemäß Anspruch 8 ist ferner ein Verfahren zur Herstellung solcher elektrischer Kondensatoren, bei dem einseitig metallisierte Bänder aus Kunststoff als Dielektrikumslagen insbesondere mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so angeordnete Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder auf die Trommel gewickelt, die je an einem Rand gegebenenfalls durchgehende metallfreie Streifen aufweisen, während in den Bereichen der gegenüberliegenden Ränder und in Abständen hierzu in Wickelrichtung intermittierende metallfreie Isolierstreifen vor oder beim Aufwickeln derart erzeugt werden, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinragen oder diesen Bereich geringfügig überschreiten,

b) die Bänder werden beim Aufwickeln auf die Trommel so geführt, daß die Mitten der Isolierstreifen des oberen Bandes symmetrisch über den Mitten der Zwischenräume zwischen den Isolierstreifen des unteren Bandes im fertigen Mutterkondensator angeordnet sind,

c) nach dem Aufwickeln und Verfestigen der Ausgangskondensatoren bzw. Mutterkondensatoren werden noch auf der Trommel zumindest die aus den Rändern gebildeten Stirnflächen durch Metallspritzen mit einer Metallschicht versehen,

d) nach dem Aufteilen in einzelne Mutterkondensatoren werden senkrecht zur Wickelrichtung in der Mitte zwischen je zwei Schneidlinien Einschnitte erzeugt, durch deren Breite und Tiefe die beiden Vorsprünge entstehen,

e) Abtrennen der einzelnen Kondensatoren, gegebenenfalls nach Befestigen der Stromzuführungen, durch Sägen, längs von Schneidlinien, die durch die Mitten der Isolierstreifen gehen,

f) Fertigstellung der Kondensatoren durch Anbringen von kappenförmigen Stromzuführungen oder von anderen Stromzuführungen, sofern diese nicht schon im Verfahrensschritte e) befestigt wurden.

Ein anderes Verfahren zur Herstellung solcher elektrischer Kondensatoren geht auf Anspruch 9 in Verbindung mit Anspruch 8 des genannten Patentes zurück und sieht vor, daß einseitig metallisierte Bänder aus Kunststoff als Dielektrikumslagen insbesondere mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils ein Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder auf die Trommel gewickelt, die an beiden Rändern und in Abständen hierzu mit in Wickelrichtung intermittierenden metallfreien Isolierstreifen vor oder bei dem Aufwickeln derart versehen werden, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinragen oder diesen Bereich geringfügig überschreiten,

b) die Bänder werden beim Aufwickeln auf die Trommel so geführt, daß die Mitten der Isolierstreifen des oberen Bandes symmetrisch über die Mitten der Zwischenräume zwischen den Isolierstreifen des unteren Bandes im fertigen Mutterkondensator angeordnet sind,

c) nach dem Aufwickeln und Verfestigen der Ausgangskondensatoren bzw. Mutterkondensatoren werden noch auf der Trommel auf beide aus den Rändern gebildete Stirnflächen durch Metallspritzen Metallschichten aufgetragen,

d) nach dem Auftrennen in einzelne Mutterkondensatoren werden senkrecht zur Wickelrichtung in der Mitte zwischen je zwei Schneidlinien an beiden Seiten Einschnitte erzeugt, durch deren Breite und Tiefe die beiden Vorsprünge entstehen,

e) Abtrennen der einzelnen Kondensatoren, gegebenenfalls nach Befestigen von Stromzuführungen, durch Sägen sowohl längs von Schneidlinien, die durch die Mitten der Isolierstreifen gehen, als auch längs einer Schneidlinie, die parallel zu den Rändern in der Mitte des Mutterkondensators liegt,

f) Fertigstellung der Kondensatoren durch Anbringen von kappenförmigen Stromzuführungen oder von anderen Stromzuführungen, sofern diese nicht schon im Verfahrensschritt e) befestigt wurden.

Die vorliegende Erfindung betrifft weitere Ausbildungen sowohl des elektrischen Kondensators des genannten europäischen Patentes als auch der beiden zum Gegenstand dieses Patentes gehörenden Verfahren.

In dem genannten Patent ist bereits darauf hingewiesen, daß die Kondensatoren, die Gegenstand dieses Patentes sind, oberhalb der ersten Dielektrikumslage und oberhalb der letzten Dielektrikumslage weitere der Isolierung dienende und kapazitiv nicht wirksame Decklagen enthalten können. Über die Ausgestaltung dieser Decklagen sind jedoch nähere Angaben nicht enthalten, weil — ausgehend von den dort als Stand der Technik geschilderten normalen Schichtkondensatoren — diese Decklagen beim Herstellungsvorgang in Form von Kunststoffolien ohne aufgetragene Metallschichten eingewickelt werden, so daß die Decklagen im fertigen Kondensator keine Metallschichten enthalten (vgl. DE-PS 1 764 541, entsprechend US-PSen 3 670 378 und 3 728 765).

In der DE-PS 25 41 111 ist ein Verfahren zur Herstellung von elektrischen Stapel- oder Schichtkondensatoren beschrieben, die für die Kondensatoren des Patentes gemäß EP-A2-0 144 857 den vorangehenden Stand der Technik darstellen.

Bei diesem bekannten Verfahren werden auf eine Trommel mit großem Durchmesser mehrere durch kapazitiv nicht wirksame Zwischenlagen voneinander getrennte Mutterkondensatoren aufgewickelt, und zwar aus einer oder mehreren Kondensatorfolien mit aufeinander folgenden seitlich zueinander versetzten Metallschichten zweier gegenpoliger Belege, die abwechselnd an eine der beiden Stirnseiten des Wickels reichen und jeweils von der anderen Stirnseite des Wickels beanstandet sind; in der Mitte der Zwischenlagen wird eine Wicklung eines beidseitig über die Stirnflächen des Kondensators vorstehenden Trennbandes eingespult; der so entstandene Ausgangskondensator wird mittels Schoop-Verfahren über seine gesamten Stirnflächen stirnkontaktiert, zur mechanischen Verfestigung getempert und dann zumindest in einer Ebene zertrennt, die durch die Rotationsachse des Wickels geht; die so entstandenen Mutterkondensatoren oder Teilstücke von Mutterkondensatoren werden entlang dem Trennband getrennt und durch weitere Schnitte senkrecht zur Folienlaufrichtung in Einzelkondensatoren aufgeteilt. Die Bildung der Zwischenlagen erfolgt dadurch, daß in deren Bereich, d. h. dort, wo Zwischenlagen vorhanden sein sollen, die Kondensatorfolien derart mit metallfreien Längsstreifen in den Metallschichten versehen werden, daß nach dem Zertrennen eines Mutterwickels die Einzelkondensatoren keine kapazitiv wirksamen Überdeckungen im Bereich der Zwischenlagen aufweisen. Die metallfreien Längsstreifen werden dabei zum Beispiel durch Funkenerosion, Erosion mittels Hochfrequenz oder Impulsen, welche über rollende Räder oder schleifende Metallbänder zugeführt werden, oder auch durch mechanische Abriebmethoden, wie z. B. rotierende, schleifende Räder erzeugt, zweckmäßigerweise möglichst nahe an der Wickelmaschine, z. B. auf eine der Trommel nahegelegenen Umlenkrolle, wenn die Erzeugung auf der Trommel selbst nicht möglich ist.

Das bekannte Verfahren geht somit von einseitig mit Metallschichten versehenen Kunststoffbändern aus, wobei abwechselnd von Kunststoffband zu Kunststoffband die Metallisierung zu gegenüber liegenden Rändern reicht, während jeweils am anderen Rand ein von Metall freier Streifen vorhanden ist, weil die Metallschicht nicht bis dorthin reicht. Der zusätzlich herzustellende metallfreie Längsstreifen wird in der Nähe des Randes erzeugt, bis zu dem die Metallschicht reicht, so daß beim späteren Kontaktieren der Stirnflächen des Ausgangskondensators die jeweilige Metallschicht mit der Metallisierung auf der Stirnseite nicht verbunden ist und diese Kunststofflage somit als Decklage wirkt.

Die elektrischen Schichtkondensatoren, die Gegenstand des eingangs genannten Patentes sind, sind von ihrer gesamten Struktur und von der Herstellungsweise vollständig anders aufgebaut als die Kondensatoren, die aus dem Verfahren der DE-PS 25 41 111 resultieren.

Der vorliegenden Erfindung liegt die Aufgabe zugrunde, die Kondensatoren, die Gegenstand des genannten europäischen Patentes sind, dahingehend weiterzubilden, daß kapazitiv nicht wirksame Decklagen vorhanden sind, die auch für diese Kondensatoren einen wirksamen Schutz gegenüber atmosphärischen und mechanischen Beanspruchungen gewährleisten und eine Verbesserung der Abschirmung gegen Störstrahlungen ergeben.

Es ist ferner Aufgabe der vorliegenden Erfindung, die beiden Verfahren des genannten Patentes so weiterzubilden, daß die Decklagen auf besonders einfache Weise hergestellt werden können.

Zur Lösung dieser Aufgabe ist der elektrische Kondensator der eingangs angegebenen Art erfindungsgemäß gekennzeichnet durch das weitere Merkmal :

f) die mindestens eine Decklage auf der Unter- und/oder Oberseite des Stapels ist als eine mit einer Metallschicht versehene, aus dem gleichen Kunststoff der Dielektrikumslagen bestehende Decklage ausgebildet, auf der beide Vorsprünge mit metallfreien Isolierstreifen versehen sind, die die Metallschicht von den der elektrischen Verbindung dienenden Metallschichten trennen.

Das Verfahren nach Anspruch 8 des genannten europäischen Patentes ist zur Lösung der Aufgabe erfindungsgemäß dadurch gekennzeichnet, daß die auf eine Anzahl jeweils einen Mutterkondensator bildender Dielektrikumslagen und Belegungen aufzubringenden, im fertigen Kondensator die Decklagen bildenden, kapazitiv nicht wirksamen Zwischenlagen ohne Einwickeln zusätzlicher besonderer Kunststoffbänder aus den metallisierten Bändern gebildet werden, indem die verwendete Vorrichtung zur Bildung der intermittierenden metallfreien Isolierstreifen so lange auf Dauerbetrieb geschaltet wird und dabei durchgehende Isolierstreifen an den Rändern der metallisierten Bänder und in Abständen hierzu bildet, bis eine der gewünschten Zahl der Decklagen entsprechende Anzahl von Zwischenlagen auf die Trommel aufgewickelt ist, dieser Vorgang nach dem Einwickeln von Trennlagen fortgesetzt wird, bis erneut die gewünschte Anzahl von Windungen für die Decklagen des nächsten Mutterkondensators aufgewickelt ist, wonach wieder nahtlos kapazitiv wirksame Dielektrikumslagen mit den intermittierenden Streifen hergestellt werden.

Das eingangs angegebene Verfahren nach den Ansprüchen 8 und 9 des genannten Patentes ist zur Lösung der Aufgabe erfindungsgemäß dadurch gekennzeichnet, daß die auf eine Anzahl jeweils einen Mutterkondensator bildender Dielektrikumslagen und Belegungen aufzubringenden, im fertigen Kondensator die Decklagen bildenden, kapazitiv nicht wirksamen Zwischenlagen ohne Einwickeln zusätzlicher besonderer Kunststoffbänder aus den metallisierten Bändern gebildet werden, indem die verwendete Vorrichtung zur Bildung der intermittierenden metallfreien Streifen so lange auf Dauerbetrieb geschaltet wird und dabei durchgehende Isolierstreifen an beiden Rändern der metallisierten Bänder in Abständen hierzu bildet, bis eine der gewünschten Anzahl von Decklagen entsprechende Anzahl der Zwischenlagen auf die Trommel aufgewickelt ist, dieser Vorgang nach dem Einwickeln von Trennlagen fortgesetzt wird, bis erneut die gewünschte Anzahl von Windungen für die Decklagen des nächsten Mutterkondensators aufgewickelt ist, wonach wieder nahtlos kapazitiv wirksame Dielektrikumslagen mit den intermittierenden Streifen hergestellt werden.

In dem genannten Patent ist im dortigen Anspruch 11 und in der Beschreibung auch darauf hingewiesen, daß die Herstellung der intermittierenden metallfreien Isolierstreifen auf den Bändern durch Anwendung von Laserstrahlen vorgenommen werden kann, wobei zur Erzielung der gewünschten Lage und Länge der Isolierstreifen zueinander und auch in bezug auf den Aufbau des Mutterkondensators bei zunehmendem Radius die Laserimpulse synchron mit der Drehung der Trommel gesteuert werden.

Eine besondere Ausführungsform zur Herstellung durchgehender metallfreier Streifen mittels Laserenergie ist in der nicht vorveröffentlichten EP-A-0 200 089 beschrieben. Dieses Verfahren kann mit Vorteil bei der Herstellung der metallfreien Streifen zur Erzeugung der Decklagen eingesetzt werden.

Die Erfindung wird nachfolgend anhand der beigefügten Figuren erläutert.

Es zeigen :

Fig. 1 schematisch einen teilweise zerlegten Kondensator nach der Erfindung,

Fig. 2 einen Ausschnitt, der das Herstellungsverfahren erläutert und

Fig. 3 einen Ausschnitt, der das andere Herstellungsverfahren erläutert.

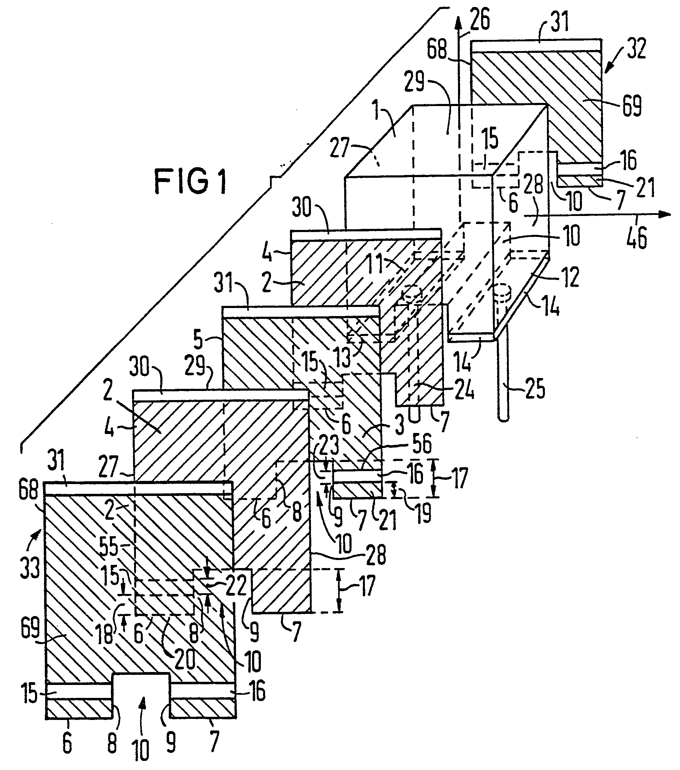

Bei dem Kondensator gemäß Fig. 1 sind die zum Stapel 1 gehörenden ersten vier und die letzte Dielektrikumslage herausgehoben gezeichnet. Die Belegungen 2 und 3, die als dünne Metallschichten aus Ventilmetall, z. B. Aluminium oder Zink, aufgetragen sind, befinden sich auf den Dielektrikumslagen 4 und 5 und reichen bis zu den beiden Längsseiten 27 und 28 des Stapels 1. Sie können auch bis zur Schmalseite 29 reichen, im vorliegenden Ausführungsbeispiel sind jedoch längs der oberen Schmalseite 29 des Stapels 1 metallfreie Streifen 30 und 31 gezeigt.

Durch einen Einschnitt 10 sind Vorsprünge 8 und 9 mit Enden 6 und 7 enstanden. Auf den Dielektrikumslagen 4 reicht die Metallbelegung 2 bis zum Ende 7 des Vorsprunges 9, während auf den Dielektrikumslagen 5 die Belegung 3 bis zum Ende des Vorsprunges 8 reicht. Alternierend von Dielektrikumslage 4 zu Dielektrikumslage 5 sind auf den Vorsprüngen 8 beziehungsweise 9 metallfreie Isolierstreifen 15 beziehungsweise 16 angeordnet, so daß Restmetallstreifen 20 beziehungsweise 21 verbleiben. Die Tiefe 17 des Einschnittes 10 sollte mindestens die Breite 18 beziehungsweise 19 der Restmetallstreifen 20, 21 überragen, vorzugsweise reicht die Tiefe 17 bis zu den inneren Rändern 55 beziehungsweise 56 der metallfreien Isolierstreifen 15 beziehungsweise 16 oder ragen etwas über die inneren Ränder hinaus. Mit anderen Worten ist die Tiefe des Einschnittes 10 größer als die addierten Breiten 18 beziehungsweise 19 und 22 beziehungsweise 23 der Restmetallstreifen 20 beziehungsweise 21 und der metallfreien Isolierstreifen 15 beziehungsweise 16. Bei der Tiefe des Einschnittes 10 ist auch die Dicke der Metallschichten 13 und 14 zu beachten, die sich auf den durch die Enden 6 und 7 der Vorsprünge 8 und 9 gebildeten Flächen 11 und 12 befinden. An den Metallschichten 13 und 14 sind die Stromzuführungsdrähte 24 und 25 befestigt, die in Richtung der Längsachse 26 des Stapels 1 verlaufen.

Anstelle der Stromzuführungsdrähte 24 und 25 können an den Metallschichten 13 und 14 auch Stromzuführungen für den Einbau des Kondensators als Chip, beispielsweise auch in Kappenform, vorhanden sein.

An der Unterseite 32 und an der Oberseite 33 des Stapels 1 sind Decklagen 68 vorhanden. Im vorliegenden Fall ist nur jeweils eine Decklage gezeigt, die Zahl dieser Decklagen richtet sich jedoch nach der Notwendigkeit, ausreichenden Schutz vor der Initiierung von Durchschlägen durch äußere Beschädigung oder Verschmutzung zu gewährleisten nach dem Abstand der kapazitiv wirksamen Lagen von der Trennfolie, der notwendig ist, um bei der Metallisierung der Stirnflächen des Ausgangskondensators eine einwandfreie Kontaktierung der kapazitiv wirksamen Lagen zu erreichen, d. h. nicht in die Abschattung zu geraten, die durch eine über die Stirnfläche des Ausgangskondensators hinausreichende Trennfolie entsteht. Besonders bei der Erzeugung kleiner Kapazitätswerte kann die Anzahl der kapazitiv wirksamen Lagen aufgewickelt und nach Abschluß der letzten Windung dieser Anzahl eine vorgegebene Gesamtdicke oder Gesamtlagenzahl des Kondensators durch kapazitiv nicht wirksame Lagen aufgefüllt werden, ohne daß hierzu komplizierte Steuerungsvorgänge notwendig werden.

Auf den Decklagen 68 befinden sich Metallschichten 69, die durch auf beiden Vorsprüngen 8 und 9 enthaltene metallfreie Isolierstreifen 15 und 16 mit den Metallschichten 13 und 14 elektrisch nicht verbunden sind.

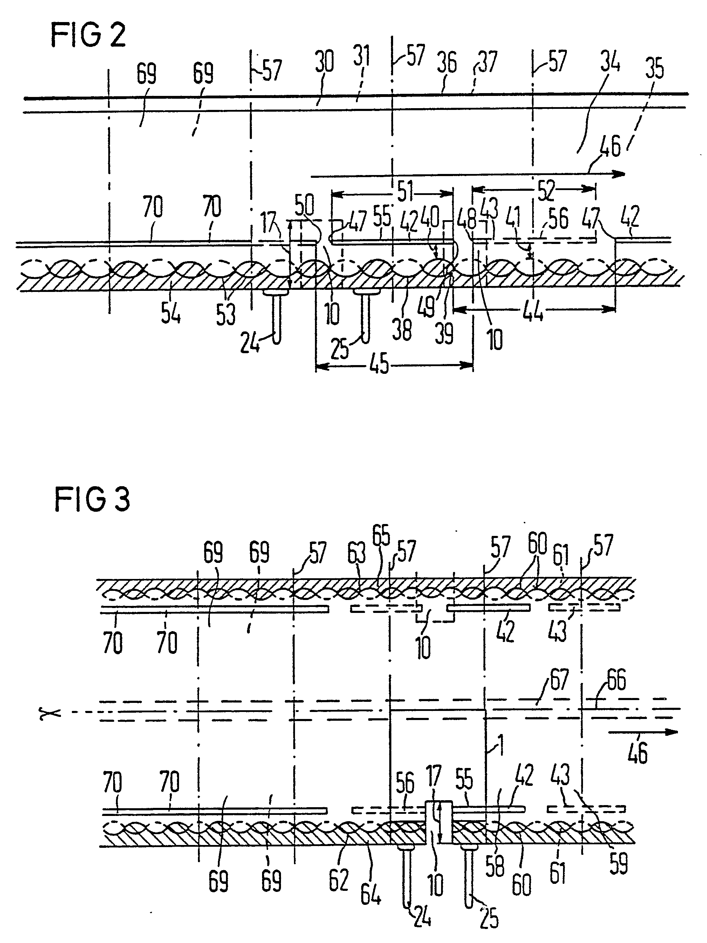

Das Verfahren zur Herstellung der Kondensatoren wird nachfolgend anhand der Figuren 2 und 3 erläutert.

Gemäß Figur 2 werden für die Herstellung der Mutterkondensatoren, beziehungsweise des Ausgangskondensators, ein oberes metallisiertes Kunststoffband 34 und ein unteres metallisiertes Kunststoffband 35, die an ihren Rändern 36 beziehungsweise 37, gegebenenfalls mit metallfreien Isolierstreifen 30 und 31 versehen sein können, in Wickelrichtung 46 auf eine hier nicht gezeigte Trommel gewickelt. Die Bänder 34 und/oder 35 sind an den gegenüberliegenden Rändern 38 und/oder 39 vorzugsweise mit einem Wellenschnitt versehen. Dieser Wellenschnitt dient dazu, die beim Metallaufspritzen erzeugte Metallschicht 54, die an der Stirnfläche 53 auf den Ausgangskondensator aufgetragen wird, flächenhaft mit den später als Belegungen dienenden Metallschichten auf den Kunststoffbändern 34 und 35 zu kontaktieren.

Vor oder spätestens beim Aufwickeln der Bänder 34 und 35 auf die Trommel werden in die auf diesen Bändern befindlichen Metallisierungen in den Bereichen der gegenüberliegenden Ränder 38 und 39 und in Abständen 40 und 41 hierzu in Wickelrichtung 46 intermittierende metallfreie Isolierstreifen 42 beziehungsweise 43 vorzugsweise derart erzeugt, daß die Zwischenräume 44 und 45 zwischen den Enden 47 und 48 und den Anfängen 49 und 50 der Isolierstreifen 42 und 43 größer sind als die Längen 51 und 52 der Isolierstreifen 42 und 43.

Die Bänder 34 und 35 werden beim Aufwickeln auf die Trommel so geführt, daß die Isolierstreifen 42 des oberen Bandes 34 praktisch in die Mitte über den Zwischenräumen 45 zwischen den Isolierstreifen 43 des unteren Bandes 35 gelangen.

Nach dem Aufwickeln und Verfestigen der Ausgangskondensatoren beziehungsweise Mutterkondensatoren wird noch auf der Trommel zumindest die aus den Rändern 38 und 39 gebildete Stirnfläche 53 durch Metallspritzen mit einer Metallschicht 54 versehen, zum Beispiel nach dem bekannten Schoop-Verfahren (vgl. US-PS 1 1 28 058).

Nach dem Auftrennen des Ausgangskondensators in einzelne Mutterkondensatoren werden senkrecht zur Wickelrichtung 46 in der Mitte zwischen je zwei Schneidlinien 57 Einschnitte 10 erzeugt, deren Breite vorzugsweise größer ist als der Abstand zwischen den Enden 47 des oberen Isolierstreifens 42 und dem Anfang 50 des unteren Isolierstreifens 43 und deren Tiefe 17, vorzugsweise bis oder über die inneren Ränder 55 und 56 der Isolierstreifen 42 und 43 reichen. Die Tiefe des Einschnittes 10 kann auch ausgenutzt werden, um die Kapazität des Kondensators auf einen gewünschten eng tolerierten Wert abzugleichen. Allgemein können die Einschnitte 10 auch erst erzeugt werden, nachdem die einzelnen Stapel 1 vom Mutterkondensator abgetrennt worden sind.

Es können nun bereits am Mutterkondensator die Stromzuführungen 24, 25 befestigt werden, es ist aber auch möglich, die einzelnen Kondensatoren zunächst durch Sägen längs der Schneidlinien 57, die durch die Mitten der Isolierstreifen 42 und 43 gehen, abzutrennen und dann die Stromzuführungen anzubringen. Dies empfiehlt sich insbesondere, wenn kappenförmige Stromzuführungen für den Einbau des Kondensators in Chipbauweise vorgesehen sind.

Sobald die für einen Mutterkondensator notwendige Anzahl von Windungen aufgewickelt sind, wird gemäß der vorliegenden Erfindung und in Weiterbildung des Verfahrens des genannten deutschen Patentes die Erzeugung der intermittierenden Isolierstreifen 42 und 43 beendet und es wird in Verlängerung dieser Isolierstreifen sowohl auf dem Band 34 als auch auf dem Band 35 oder auch nur auf einem von beiden Bändern ein durchgehender Isolierstreifen 70 erzeugt, der die Metallisierung auf diesen Bändern von den Rändern 38 beziehungsweise 39 trennt, so daß eine zur Kontaktierungsseite hin isolierte Metallschicht 69 auf einem, vorzugsweise auf beiden Bändern entsteht. Die Erzeugung des einen oder der beiden Isolierstreifen 70 wird so lange fortgesetzt, bis die gewünschte Anzahl von Windungen auf den Mutterkondensator aufgelegt ist. Werden auf die Trommel mehrere Mutterkondensatoren, die zusammen einen Ausgangskondensator bilden, gewickelt, so wird auf diese später als Decklagen dienenden Windungen eine Trennlage eingewickelt, und zwar für wenigstens eine Umdrehung der Trommel, wobei mit der Erzeugung des Isolierstreifens 70 fortgefahren wird und wiederum als gewissermaßen Unterseite des Stapels entsprechend viele Windungen aufgebracht werden. Danach wird erneut mit der Erzeugung der intermittierenden Isolierstreifen begonnen, damit der nächste Mutterkondensator entstehen kann.

Das in Figur 3 dargestellte Verfahren unterscheidet sich von dem im Zusammenhang mit Figur 2 erläuterten Verfahren dadurch, daß zwei metallisierte Bänder 58 und 59 miteinander auf die hier ebenfalls nicht dargestellte Trommel in Wickelrichtung 46 aufgewickelt werden. Das obere metallisierte Band 58 und gegebenenfalls auch das untere metallisierte Band 59 weisen an ihren Rändern 60 und/oder 61 Wellenschnittkanten auf. Bei oder kurz vor dem Aufwickeln werden die intermittierenden metallfreien Streifen 42 auf dem oberen Band 58 und die metallfreien Streifen 43 auf dem unteren Band 59 an jeweils beiden Rändern derselben erzeugt. Für die Abstände dieser metallfreien Streifen von den Rändern und voneinander und für die Führung dieser Bander beim Aufwickeln auf die Trommel gelten die gleichen Maßangaben wie bei dem 5 anhand der Figur 2 beschriebenen Verfahren.

Die Erzeugung der metallfreien Streifen 70 zur Bildung der von den Rändern 60 und 61 isolierten Metallschichten 69 geschieht hier in gleicher Weise, wie dies bei dem vorangehend erläuterten Verfahren der Fall ist, jedoch an beiden Rändern.

Nach dem Fertigstellen eines Mutterkondensators oder eines aus mehreren Mutterkondensatoren bestehenden Ausgangskondensators werden auf den durch die Ränder 60 und 61 gebildeten Stirnflächen 62 und 63 Metallschichten 64 und 65 aufgespritzt (Schoop-Verfahren).

Da die Breite der zu verwickelnden Bänder 58 und 59 so gewählt wurde, daß sie der Summe der Höhen zweier Kondensatoren entspricht, wird vor oder nach dem Erzeugen der Einschnitte 10 der Mutterkondensator sowohl längs der Schneidlinien 57 als auch der mittleren Schneidlinie 66 aufgetrennt.

Gegebenenfalls befindet sich in der Mitte der Bänder 58 und 59 je ein metallfreier Streifen 67, der im fertigen Kondensator die metallfreien Streifen 30 und 31 (Figur 1) ergibt.

Die Vorteile des Kondensators nach der Erfindung und der Verfahren zu seiner Herstellung bestehen darin, daß auf besonders einfache Weise und praktisch ohne Unterbrechung des Wickelvorganges bei entsprechender Steuerung der die Metallstreifen erzeugenden Vorrichtung Kondensatoren mit einer gewünschten Anzahl kapazitiv nicht wirksamer Decklagen erzeugt werden können, die mechanisch stabil, gegen atmosphärische Einflüsse auf den von den Decklagen bedeckten Flächen resistent und zusätzlich gegen Störstrahlungen abgeschirmt sind.

Bezugszeichenliste

| | |
|---|---|
| 1 | verfestigter Stapel |
| 2 | Belegung auf der Dielektrikumslage 4 |
| 3 | Belegung auf der Dielektrikumslage 5 |
| 4 | Dielektrikumslage |
| 5 | Dielektrikumslage |
| 6 | Ende des Vorsprungs 8 |
| 7 | Ende des Vorsprungs 9 |
| 8 | Vorsprung an der Dielektrikumslage 4 |
| 9 | Vorsprung an der Dielektrikumslage 5 |
| 10 | Einschnitt im verfestigten Stapel 1 |
| 11 | Fläche am Ende der Vorsprünge 8 im verfestigten Stapel 1 |
| 12 | Fläche am Ende der Vorsprünge 9 im verfestigten Stapel 1 |
| 13 | Metallschicht auf Fläche 11 |
| 14 | Metallschicht auf Fläche 32 |
| 15 | metallfreier Isolierstreifen |
| 16 | metallfreier Isolierstreifen |
| 17 | Tiefe des Einschnittes 10 |
| 18 | Breite des Restmetallstreifens 20 auf dem Vorsprung 8 |
| 19 | Breite des Restmetallstreifens 21 auf dem Vorsprung 9 |
| 20 | Restmetallstreifen |
| 21 | Restmetallstreifen |
| 22 | Breite des metallfreien Isolierstreifens 15 |
| 23 | Breite des metallfreien Isolierstreifens 16 |
| 24 | Stromzuführungsdraht |
| 25 | Stromzuführungsdraht |
| 26 | Längsachse des Stapels 1 |
| 27 | Längsseite des Stapels 1 |
| 28 | Längsseite des Stapels 1 |
| 29 | obere Schmalseite des Stapels 1 |
| 30 | metallfreie Streifen |
| 31 | metallfreie Streifen |
| 32 | Unterseite des Stapels 1 |
| 33 | Oberseite des Stapels 1 |

EP 0 202 479 B1

34 oberes metallisiertes Kunststoffband
35 unteres metallisiertes Kunststoffband
36 Rand des Bandes 34
37 Rand des Bandes 35
38 gegenüberliegender Rand des Bandes 34
39 gegenüberliegender Rand des Bandes 35
40 Abstand zwischen Rand 38 und Isolierstreifen 42
41 Abstand zwischen Rand 39 und Isolierstreifen 43
42 Isolierstreifen auf Band 34
43 Isolierstreifen auf Band 35
44 Zwischenräume zwischen den Isolierstreifen 42
45 Zwischenräume zwischen den Isolierstreifen 43
46 Wickelrichtung
47 Ende der Isolierstreifen 42
48 Ende der Isolierstreifen 43
49 Anfang der Isolierstreifen 42
50 Anfang der Isolierstreifen 43
51 Länge der Isolierstreifen 42
52 Länge der Isolierstreifen 43
53 Stirnfläche
54 Metallschicht
55 innerer Rand des Isolierstreifens 42
56 innerer Rand des Isolierstreifens 43
57 Schneidlinien
58 oberes metallisiertes Band
59 unteres metallisiertes Band
60 Ränder des Bandes 58
61 Ränder des Bandes 59
62 Stirnfläche
63 Stirnfläche
64 Metallschichten auf der Stirnfläche 62
65 Metallschichten auf der Stirnfläche 63
66 Schneidlinie
67 metallfreie Streifen
68 Decklage
69 Metallschicht
70 durchgehende Isolierstreifen


**Patentansprüche**

1. Elektrischer Kondensator aus einem verfestigten Stapel (1) von mit je einer Metallschicht als Belegung (2, 3) versehenen, aneinandergeschichteten Dielektrikumslagen (4, 5), bei dem die Belegungen (2, 3) von Lage zu Lage abwechselnd bis zu den Enden (6, 7) von zwei Vorsprüngen (8, 9) reichen, die durch einen Einschnitt (10) entstanden sind, der in Richtung der Dicke des Stapels (1) und etwa in der Mitte einer Seite desselben verläuft, bei dem ferner die von den Enden (6, 7) der Vorsprünge (8, 9) im verfestigten Stapel (1) gebildeten Flächen (11, 12) mit zur Kontaktierung dienenden Metallschichten (13, 14) versehen sind, die die gegenpoligen Belegungen (2, 3) miteinander verbinden, mit den Merkmalen :
   a) die Dielektrikumslagen (4, 5) bestehen aus Kunststoffolien,
   b) die Belegungen (2, 3) bestehen aus regenerierfähig dünnen Schichten aus Ventilmetall und bedecken je eine Fläche der Dielektrikumslagen (4, 5) praktisch bis zu den Rändern an den Längsseiten (27, 28) sowie bis zu beiden Enden (6, 7) der Vorsprünge (8, 9) und gegebenenfalls bis zum Rand der oberen Schmalseite (29) des Stapels (1), die der den Einschnitt (10) enthaltenen Schmalseite gegenüber liegt,
   c) alternierend von Dielektrikumslage (4) zu Dielektrikumslage (5) sind die Vorsprünge (8, 9) mit metallfreien Isolierstreifen (15 bzw. 16) versehen, wobei die Tiefe (17) des Einschnittes (10) entweder größer ist als die Breite (18 bzw. 19) des Restmetallstreifens (20 bzw. 21) oder vorzugsweise mit den inneren Rändern (55, 56) der Isolierstreifen (15, 16) zusammenfällt oder über diese Ränder (55, 56) hinaus in den Stapel (1) hineinreicht.
   d) die die gegenpoligen Belegungen (2, 3) auf den Flächen (11, 12) miteinander verbindenden Metallschichten (13, 14) sind durch Metallspritzen hergestellt.
   e) der Stapel (1) besitzt auf seiner Unter- (32) und/oder Oberseite (33) mindestens jeweils eine kapazitiv nicht wirksame Decklage (68),
   gekennzeichnet durch das weitere Merkmal :
   f) die mindestens eine Decklage auf der Unter- (32) und/oder Oberseite (33) des Stapels (1) ist als eine

7

mit einer Metallschicht (69) versehene, aus dem gleichen Kunststoff der Dielektrikumslagen (4, 5) bestehende Decklage (68) ausgebildet, auf der beide Vorsprünge (8, 9) mit metallfreien Isolierstreifen (15, 16) versehen sind, die die Metallschicht (69) von den der elektrischen Verbindung dienenden Metallschichten (13, 14) trennen.

2. Verfahren zur Herstellung elektrischer Kondensatoren nach Anspruch 1, bei dem einseitig metallisierte Bänder aus Kunststoff als Dielektrikumslagen, insbesondere mit randseitigem Wellenschnitt, auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten :

a) es werden metallisierte Bänder (34, 35) auf die Trommel gewickelt, die je an einem Rand (36, 37) gegebenenfalls durchgehende metallfreie Streifen (30, 31) aufweisen, während in den Bereichen der gegenüberliegenden Ränder (38, 39) und in Abständen (40, 41) hierzu in Wickelrichtung (46) intermittierende metallfreie Isolierstreifen (42 bzw. 43) vor oder bei dem Aufwickeln derart erzeugt werden, daß die Isolierstreifen (42, 43) beim Aufwickeln auf die Trommel in einer Ebene senkrecht zur Wickelachse liegen und sowohl die Enden (47, 48) als auch die Anfänge (49, 50) der Isolierstreifen (42, 43) bis in den Bereich des späteren Einschnittes (10) hineinragen oder diesen Bereich geringfügig überschreiten,

b) die Bänder (34, 35) werden beim Aufwickeln auf die Trommel so geführt, daß die Mitten der Isolierstreifen (42) des oberen Bandes (34) symmetrisch über den Mitten der Zwischenräume (45) zwischen den Isolierstreifen (43) des unteren Bandes (35), fertigen Mutterkondensatoren angeordnet sind,

c) nach dem Aufwickeln und Verfestigen der Ausgangskondensatoren bzw. Mutterkondensatoren wird noch auf der Trommel zumindest die aus den Rändern (38, 39) gebildete Stirnfläche (53) durch Metallspritzen mit einer Metallschicht (54) versehen,

d) nach dem Auftrennen in einzelne Mutterkondensatoren werden senkrecht zur Wickelrichtung (46) in der Mitte zwischen je zwei Schneidlinien (57) Einschnitte (10) erzeugt, durch deren Breite und Tiefe (17) die beiden Vorsprünge 88, 9) entstehen,

e) Abtrennen der einzelnen Kondensatoren, gegebenenfalls nach Befestigen von Stromzuführungen (24, 25 32), durch Sägen längs von Schneidlinien (57), die durch die Mitten der Isolierstreifen 842, 43) gehen,

f) Fertigstellung der Kondensatoren durch Anbringen von kappenförmigen Stromzuführungen (33) oder von anderen Stromzuführungen (24, 25 32), sofern diese nicht schon im Verfahrensschritt e) befestigt wurden, dadurch gekennzeichnet, daß die auf eine Anzahl jeweils einen Mutterkondensator bildender Dielektrikumslagen und Belegungen aufzubringenden, im fertigen Kondensator die Decklagen (68) bildenden, kapazitiv nicht wirksamen Zwischenlagen ohne Einwickeln zusätzlicher besonderer Kunststoffbänder aus den metallisierten Bändern (34, 35) gebildet werden, indem die verwendete Vorrichtung zur Bildung der intermittierenden metallfreien Isolierstreifen (42, 43) so lange auf Dauerbetrieb geschaltet wird und dabei durchgehende Isolierstreifen (70) an den Rändern (38, 39) der metallisierten Bänder (34, 35) und in Abständen hierzu bildet, bis eine der gewünschten Zahl von Decklagen (68) entsprechend Anzahl der Zwischenlagen auf die Trommel aufgewickelt ist, dieser Vorgang nach dem Einwickeln von Trennlagen fortgesetzt wird, bis erneut die gewünschte Anzahl von Windungen für die Decklagen (68) des nächsten Mutterkondensators aufgewickelt ist, wonach wieder nahtlos kapazitiv wirksame Dielektrikumslagen mit den intermittierenden Streifen (42, 43) hergestellt werden.

3. Verfahren zur Herstellung elektrischer Kondensatoren nach Anspruch 1, bei dem einseitig metallisierte Bänder aus Kunststoff als Dielektrikumslagen, insbesondere mit randseitigem Wellenschnitt auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls auf eine Anzahl jeweils einen Mutterkondensator bildender Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird mit den Verfahrensschritten :

a) es werden metallisierte Bänder (58, 59) auf die Trommel gewickelt, die an beiden Rändern (60, 61) und in Abständen hierzu mit in Wickelrichtung intermittierenden metallfreien Isolierstreifen (42 bzw. 43) vor oder bei dem Aufwickeln derart versehen werden, daß die Isolierstreifen (42, 43) beim Aufwickeln auf die Trommel in einer Ebene senkrecht zur Wickelachse liegen und sowohl die Enden als auch die Anfänge der Isolierstreifen (42, 43) bis in den Bereich des späteren Einschnittes (10) hineinragen oder diesen Bereich geringfügig überschreiten,

b) die Bänder (58, 59) werden beim Aufwickeln auf die Trommel so geführt, daß die Mitten der Isolierstreifen (42) des oberen Bandes (58) symmetrisch über den Mitten der Zwischenräume zwischen den Isolierstreifen (43) des unteren Bandes (59) im fertigen Mutterkondensator angeordnet sind,

c) nach dem Aufwickeln und Verfestigen der Ausgangskondensatoren bzw. Mutterkondensatoren werden noch auf der Trommel auf beide aus den Rändern (60, 61) gebildete Stirnflächen (61, 63) durch Metallspritzen Metallschichten aufgetragen,

d) nach dem Auftrennen in einzelne Mutterkondensatoren werden senkrecht zur Wickelrichtung in der Mitte zwischen je zwei Schneidlinien (57) an beiden Seiten Einschnitte (10) erzeugt, durch deren Breite und Tiefe (17) die beiden Vorsprünge (8, 9) entstehen,

e) Abtrennen der einzelnen Kondensatoren, gegebenenfalls nach Befestigen von Stromzuführungen (24, 25, 32), durch Sägen sowohl längs von Schneidlinien (57), die durch die Mitten der Isolierstreifen (42, 43) gehen, als auch längs einer Schneidlinie (66), die parallel zu den Rändern 860, 61) in der Mitte des Mutterkondensators liegt,

f) Fertigstellung der Kondensatoren durch Anbringen von kappenförmigen Stromzuführungen (33) oder von anderen Stromzuführungen (24, 25, 32), sofern diese nicht schon im Verfahrensschritt e) befestigt wurden, dadurch gekennzeichnet, daß die auf eine Anzahl jeweils einen Mutterkondensator bildender Dielektrikumslagen und Belegungen aufzubringenden, im fertigen Kondensator die Decklagen (68) bildenden, kapazitiv nicht wirksamen Zwischenlagen ohne Einwickeln zusätzlicher besonderer Kunststoffbänder aus den metallisierten Bändern (58, 59) gebildet werden, indem die verwendete Vorrichtung zur Bildung der intermittierenden metallfreien Isolierstreifen (42, 43) so lange auf Dauerbetrieb geschaltet wird und dabei durchgehende Isolierstreifen (70) an beiden Rändern (60, 61) der metallisierten Bänder (58, 59) und in Abständen hierzu bildet, bis eine der gewünschten Zahl von Decklagen (68) entsprechende Anzahl der Zwischenlagen auf die Trommel aufgewickelt ist, dieser Vorgang nach dem Einwickeln von Trennlagen fortgesetzt wird, bis erneut die gewünschte Anzahl von Windungen für die Decklagen (68) des nächsten Mutterkondensators aufgewickelt ist, wonach wieder nahtlos kapazitiv wirksame Dielektrikumslagen mit den intermittierenden Streifen (42, 43) hergestellt werden.

## Claims

1. Electrical capacitor comprising a consolidated stack (1) of dielectric layers (4, 5), which are stacked one on another and are each provided with a metal film as coating (2, 3), in which electrical capacitor the coatings (2, 3) reach, alternating from layer to layer, up to the ends (6, 7) of two projections (8, 9), which are produced by an incision (10) which extends in the direction of the thickness of the stack (1) and approximately in the middle of one side thereof, in which, further, the faces (11, 12) formed in the consolidated stack (1) by the ends (6, 7) of the projections (8, 9) are provided with metal films (13, 14) serving to make contact, which metal films connect the oppositely poled coatings (2, 3) to one another, having the features :

a) the dielectric layers (4, 5) consist of plastic foils,

b) the coatings (2, 3) consist of regenerative thin films of valve metal, and each cover an area of the dielectric layers (4, 5) practically up to the edges at the long sides (27, 28) and also up to the two ends (6, 7) of the projections (8, 9) and, if necessary, up to the edge of the upper narrow side (29) of the stack (1), which lies opposite the narrow side containing the incision (10),

c) alternating from dielectric layer (4) to dielectric layer (5), the projections (8, 9) are provided with metal-free insulating strips (15 or 16), the depth (17) of the incision (10) either being greater than the width (18 or 19) of the residual metal strip (20 or 21), or preferably coinciding with the inner edges (55, 56) of the insulating strips (15, 16), or reaching beyond these edges (55, 56) into the stack (1),

d) the metal films (13, 14), which connect the oppositely poled coatings (2, 3) on the faces (11, 12) with one another, are made by metal spraying,

e) on its underside (32) and/or topside (33), the stack (1) has in each case at least one capacitively ineffective facing (68), characterized by the further feature :

f) the at least one facing on the underside (32) and/or topside (33) of the stack (1) is constructed as a facing (68), which is provided with a metal film (69) and consists of the same plastic as the dielectric layers (4, 5), and on which both projections (8, 9) are provided with metal-free insulating strips (15, 16), which separate the metal layer (69) from the metal layers (13, 14) serving the electrical connection.

2. Process for making electrical capacitors according to Claim 1, in which plastic tapes metallized on one side and especially having a wavy section at the edge side are stacked as dielectric layers on a drum to form an initial capacitor and the initial capacitor is divided up perpendicular to the planes of the layers into the desired individual capacitors, there being arranged, if necessary, on a number of dielectric layers and coatings forming in each case a mother capacitor, capacitatively ineffective intermediate layers and thereupon once again the capacitatively effective dielectric layers with the coatings for the next mother capacitor, and the initial capacitor thus produced being provided with butt contact layers and thereafter being divided in the region of the intermediate layers and in the direction perpendicular thereto, having the process steps :

a) there are wound onto the drum metallized tapes (34, 35), which each have metal-free, if necessary continuous, strips (30, 31) at an edge (36, 37), while in the regions of the edges lying opposite (38, 39) and at spacings (40, 41) herefrom intermittent metal-free insulating strips (42 or 43) are produced in the winding direction (46) before or during winding on in such a way that during winding onto the drum the insulating strips (42, 43) lie in a plane perpendicular to the winding axis and both the ends (47, 48) and also the starts (49, 50) of the insulating strips (42, 43) project as far as into the region of the later incision (10) or slightly overshoot this region,

b) during winding onto the drum the tapes (34, 35) are guided in such a way that the middles of the insulating strips (42) of the upper tape (34) are arranged symmetrically over the middles of the gaps (45) between the insulating strips (43) of the lower tape (35) in the finished mother capacitor,

c) after winding on and consolidation of the initial capacitors or mother capacitors at least the end face (53) formed from the edges (38, 39) is provided with a metal film (54) while still on the drum by means of metal spraying,

d) after splitting up into individual mother capacitors there are provided perpendicular to the winding direction (46) in the middle between two lines of section (57) in each case incisions (10), by means of the width and depth (17) of which the two projections (8, 9) are produced,

e) detaching of the individual capacitors, if necessary after attaching of current feeds (24, 25, 32), by sawing along the lines of section (57), which pass through the middles of the insulating strips (42, 43),

f) finishing of the capacitors by fitting cap-shaped current feeds (33) or other current feeds (24, 25, 32), provided that these have not already been attached in the process step e), characterized in that the capacitatively ineffective intermediate layers, which are to be applied to a number of dielectric layers and coatings forming in each case a mother capacitor, and which form the facings (68) in the finished capacitor, are formed from the metallized tapes (34, 35) without winding in additional special plastic tapes, wherein the device used to form the intermittent metal-free insulating strips (42, 43) is switched to continuous operation, thereby forming continuous insulating strips (70) at the edges (38, 39) of the metallized tapes (34, 35) and at spacings herefrom, for such time until a number of intermediate layers corresponding to the desired number of facings (68) is wound onto the drum, this procedure is continued after the winding in of separating layers until the desired number of turns for the facings (68) of the next mother capacitor is wound on anew, whereupon capacitatively effective dielectric layers with the intermittent strips (42, 43) are again produced without a break.

3. Process for making electrical capacitors according to Claim 1, in which plastic tapes metallized on one side and especially having a wavy section at the edge side are stacked as dielectric layers on a drum to form an initial capacitor and the initial capacitor is divided up perpendicular to the planes of the layers into the desired individual capacitors, there being arranged, if necessary, on a number of dielectric layers and coatings forming in each case a mother capacitor, capacitatively ineffective intermediate layers and thereupon once again the capacitatively effective dielectric layers with the coatings for the next mother capacitor, and the initial capacitor thus produced being provided with butt contact layers and thereafter being divided in the region of the intermediate layers and in the direction perpendicular thereto, having the process steps :

a) there are wound onto the drum metallized tapes (58, 59), which at both edges (60, 61) and at spacings herefrom are provided with intermittent metal-free insulating strips (42 or 43) in the winding direction before or during winding on in such a way that during winding onto the drum the insulating strips (42, 43) lie in a plane perpendicular to the winding axis and both the ends and also the starts of the insulating strips (42, 43) project as far as into the region of the later incision (10) or slightly overshoot this region,

b) during winding onto the drum the tapes (58, 59) are guided in such a way that the middles of the insulating strips (42) of the upper tape (58) are arranged symmetrically over the middles of the gaps between the insulating strips (43) of the lower tape (59) in the finished mother capacitor,

c) after winding on and consolidation of the initial capacitors or mother capacitors metal films are applied to both the end faces (61, 63), formed from the edges (60, 61), while still on the drum by means of metal spraying,

d) after splitting up into individual mother capacitors there are produced perpendicular to the winding direction in the middle between two lines of section (57) in each case incisions (10) on both sides, by means of the width and depth (17) of which the two projections (8, 9) are produced,

e) detaching of the individual capacitors, if necessary after attaching of current feeds (24, 25, 32), by sawing both along the lines of section (57), which pass through the middles of the insulating strips (42, 43), and also along a line of section (66), which lies parallel to the edges (60, 61) in the middle of the mother capacitor,

f) finishing of the capacitors by fitting cap-shaped current feeds (33) or other current feeds (24, 25, 32), provided that these have not already been attached in the process step e), characterized in that the capacitatively ineffective intermediate layers, which are to be applied to a number of dielectric layers and coatings forming in each case a mother capacitor, and which form the facings (68) in the finished capacitor, are formed from the metallized tapes (58, 59) without winding in additional special plastic tapes, wherein the device used to form the intermittent metal-free insulating strips (42, 43) is switched to continuous operation, thereby forming continuous intermittent strips (70) at both edges (60, 61) of the metallized tapes (58, 59) and at spacings herefrom, for such time until a number of intermediate layers corresponding to the desired number of facings (68) is wound onto the drum, this procedure is continued after the winding in of separating layers until the desired number of turns for the facings (68) of the next mother capacitor is wound on anew, whereupon capacitatively effective dielectric layers with the intermittent strips (42, 43) are again produced without a break.

**Revendications**

1. Condensateur électrique constitué par une pile consolidée (1) de couches diélectriques juxtaposées (4, 5), équipées, chacune, d'une couche métallique formant armature (2, 3), et dans lequel les armatures (2, 3) s'étendent, en alternance d'une couche à l'autre, jusqu'aux extrémités (6, 7) de deux parties saillantes (8, 9), qui sont délimitées par une découpe (10), qui s'étend en direction de l'épaisseur de la pile (1), et ce approximativement au centre de la face de cette pile, et dans lequel en outre les surfaces (11, 12), qui sont formées par les extrémités (6, 7) des parties saillantes (8, 9) dans la pile consolidée (1), comportent des couches métalliques (13, 14), qui servent à l'établissement des contacts et relient entre elles les armatures (2, 3) possédant des polarités opposées, présentant les caractéristiques suivantes :

a) les couches diélectriques (4, 5) sont constituées par des feuilles en matière plastique,

b) les armatures (2, 3) sont constituées par des couches minces régénérables formées d'un métal pour soupapes et recouvrent, chacune, une surface des couches diélectriques (4, 5), pratiquement jusqu'aux bords situés sur les côtés longitudinaux (27, 28), ainsi que jusqu'aux deux extrémités (6, 7) des parties saillantes (8, 9) et, éventuellement, jusqu'au bord du petit côté supérieur (29) de la pile (1), qui est situé à l'opposé du petit côté comportant la découpe (10),

c) les parties saillantes (8, 9) comportent en alternance d'une couche diélectrique (4) a l'autre couche diélectrique (5), des bandes isolantes exemptes de métal (15 ou 16), la profondeur (17) de la découpe (10) étant supérieure à la largeur (18 ou 19) de la bande métallique résiduelle (20 ou 21) ou s'étendant, de préférence, jusqu'au niveau des bords intérieurs (55, 56) des bandes isolantes (15, 16) ou bien au-delà de ces bords (55, 56), dans la pile (1),

d) les couches métalliques (13, 14), qui relient entre elles les armatures (2, 3) possédant des polarités opposées, sur les surfaces (11, 12), sont formées au moyen d'une projection de métal,

e) la pile (1) possède, sur sa face inférieure (32) et/ou sur sa face supérieure (33), au moins une couche respective de recouvrement (68), non active du point de vue capacitif,
caractérisé par le moyen particulier suivant :

f) au moins une couche de recouvrement, située sur la face inférieure (32) et/ou sur la face supérieure (33) de la pile (1), est réalisée sous la forme d'une couche de recouvrement (68), qui est pourvue d'une couche métallique (69) et est constituée par la même matière plastique que les couches diélectriques (4, 5), et sur laquelle les deux parties saillantes (8, 9) sont pourvues de bandes isolantes exemptes de métal (15, 16), qui séparent la couche métallique (69) des couches métalliques (13, 14) utilisées pour l'établissement de la liaison électrique.

2. Procédé pour fabriquer des condensateurs électriques suivant la revendication 1, selon lequel on dépose des bandes de matière plastique, métallisées sur une face et utilisées comme couches électriques et présentant notamment des bords de coupe ondulés, sur un tambour de manière à former un condensateur de départ, et on subdivise ce condensateur de départ, perpendiculairement aux plans des couches, de manière à former les condensateurs individuels désirés, auquel cas on dépose éventuellement, sur un certain nombre de couches diélectriques et d'armatures, constituant respectivement un condensateur mère, des couches intercalaires n'ayant aucune action capacitive, et on dépose à nouveau, sur ces couches, des couches diélectriques ayant une action capacitive et comportant les armatures, pour former le condensateur mère immédiatement suivant, et on équipe le condensateur de départ, ainsi obtenu, de couches frontales de contact et ensuite, on le subdivise dans la zone des couches intercalaires et dans la direction perpendiculaire à ces couches, et incluant les étapes opératoires suivantes :

a) on enroule, sur le tambour, des bandes métallisées (34, 35), qui possèdent éventuellement, respectivement au niveau d'un bord (36, 37), des bandes continues exemptes de métal (30, 31), tandis qu'on forme, dans les zones des bords opposés (38, 39) et à certaines distances (40, 41) de ces bords, des bandes isolantes (42 ou 43) exemptes de métal, discontinues dans la direction d'enroulement (46), avant ou lors de l'opération d'enroulement, de telle sorte que les bandes isolantes (42, 43) sont situées, lors de l'enroulement sur le tambour, dans un plan perpendiculaire à l'axe d'enroulement, et qu'aussi bien les extrémités (47, 48) que les départs (49, 50) des bandes isolantes (42, 43) s'étendent jusque dans la zone de la découpe (10) formée ultérieurement ou dépassent légèrement cette zone,

b) lors de l'enroulement sur le tambour, on guide les bandes (34, 35) de manière que les centres des bandes isolantes (42) de la bande supérieure (34) soient disposés symétriquement au-dessus des centres des espaces intercalaires (45) présents entre les bandes isolantes (43) de la bande inférieure (35), dans condensateur mère terminé,

c) après l'enroulement et la consolidation des condensateurs de départ ou des condensateurs mères, on applique en outre, par projection, une couche métallique (54) au moins sur la surface frontale (53) formée à partir des bords (38, 39), alors que les condensateurs sont encore sur le tambour,

d) après subdivision en des condensateurs mères individuels, on forme, perpendiculairement à la direction d'enroulement (46), dans la zone médiane située entre deux lignes respectives de coupe (57), des découpes (10), dont la largeur et la profondeur (17) délimitent les deux parties saillantes (8, 9),

e) on sépare les différents condensateurs, éventuellement après fixation d'éléments d'alimentation en courant (24, 25, 32), par sciage le long de lignes de coupe (57), qui passent par les milieux des bandes isolantes (42, 43),

f) on termine la fabrication des condensateurs en déposant des éléments d'alimentation en courant (33) en forme de capuchons ou bien d'autres éléments d'alimentation en courant (24, 25, 32), dans la mesure où ces derniers n'ont pas encore été fixés lors de l'étape opératoire e), caractérisé par le fait qu'on forme les couches intercalaires, non actives du point de vue capacitif, qui doivent être déposées sur un certain nombre de couches diélectriques et d'armatures, constituant respectivement un condensateur mère, et forment les couches de recouvrement (68) dans le condensateur terminé, à partir des bandes métallisées (34, 35), sans l'enroulement de bandes particulières supplémentaires en matière plastique, par le fait qu'on fait fonctionner en continu le dispositif utilisé pour former les bandes isolantes discontinues exemptes de métal (42, 43) et on forme des bandes isolantes continues (70) au voisinage des bords (38, 39) des bandes métallisées (34, 35) et à certaines distances de ces bords, jusqu'à ce qu'un nombre de couches intermédiaires, correspondant au nombre désiré de couches de recouvrement (68), soient enroulées sur le tambour, on poursuit cette opération après l'enroulement de couches de séparation, jusqu'à ce que le nombre désiré d'enroulements soit, à nouveau, obtenu pour les couches de recouvrement (68) du condensateur mère immédiatement suivant, à la suite de quoi on forme à nouveau, sans soudure, des couches diélectriques ayant une action capacitive et comportant les bandes discontinues (42, 43).

3. Procédé pour fabriquer des condensateurs électriques suivant la revendication 1, selon lequel on dépose des bandes de matière plastique, métallisées sur une face et utilisées comme couches électriques et présentant notamment des bords de coupe ondulés, sur un tambour de manière à former un condensateur de départ, et on subdivise ce condensateur de départ, perpendiculairement aux plans des couches, de manière à former les condensateurs individuels désirés, auquel cas on dépose éventuellement, sur un certain nombre de couches diélectriques et d'armatures, constituant respectivement un condensateur mère, des couches intercalaires n'ayant aucune action capacitive, et on dépose à nouveau, sur ces couches, des couches diélectriques ayant une action capacitive et comportant les armatures, pour former le condensateur mère immédiatement suivant, et on équipe le condensateur de départ, ainsi obtenu, de couches frontales de contact et, ensuite, on le subdivise dans la zone des couches intercalaires et dans la direction perpendiculaire à ces couches et incluant les étapes opératoires suivantes :

a) on enroule, sur le tambour, des bandes métallisées (58, 59), qui possèdent, au voisinage de deux bords (60, 61) et à certaines distances de ces bords, des bandes isolantes (42 ou 43) exemptes de métal, discontinues dans la direction d'enroulement (46), avant ou lors de l'opération d'enroulement, de telle sorte que les bandes isolantes (42, 43) sont situées, lors de l'enroulement sur le tambour, dans un plan perpendiculaire à l'axe d'enroulement, et qu'aussi bien les extrémités (47, 48) que les départs (49, 50) des bandes isolantes (42, 43) s'étendent jusque dans la zone de la découpe (10) formée ultérieurement ou dépassent légèrement cette zone,

b) lors de l'enroulement sur le tambour, on guide les bandes (58, 59) de manière que les centres des bandes isolantes (42) de la bande supérieure (58) soient disposés symétriquement au-dessus des centres des espaces intercalaires présents entre les bandes isolantes (43) de la bande inférieure (59), dans le condensateur mère terminé,

c) après l'enroulement et la consolidation des condensateurs de départ ou des condensateurs mères, on applique en outre, par projection, des couches métalliques (54) sur les deux surfaces frontales (61, 63) formées à partir des bords (60, 61), alors que les condensateurs sont encore sur le tambour,

d) après subdivision en des condensateurs mères individuels, on forme, perpendiculairement à la direction d'enroulement, dans la zone médiane située entre deux lignes respectives de coupe (57), des découpes (10), dont la largeur et la profondeur (17) délimitent les deux parties saillantes (8, 9),

e) on sépare les différents condensateurs, éventuellement après fixation d'éléments d'alimentation en courant (24, 25, 32), par sciage aussi bien le long de lignes de coupe (57), qui passent par les milieux des bandes isolantes (42, 43) que le long d'une ligne de coupe (66) parallèle aux bords (60, 61) et située au centre du condensateur mère,

f) on termine la fabrication des condensateurs en déposant des éléments d'alimentation en courant (33) en forme de capuchons ou bien d'autres éléments d'alimentation en courant (24, 25, 32), dans la mesure où ces derniers n'ont pas encore été fixés lors de l'étape opératoire e), caractérisé par le fait qu'on forme les couches intercalaires, non actives du point de vue capacitif, qui doivent être déposées sur un certain nombre de couches diélectriques et d'armatures, constituant respectivement un condensateur mère, et forment les couches de recouvrement (68) dans le condensateur terminé, à partir des bandes métallisées (58, 59), sans l'enroulement de bandes particulières supplémentaires en matière plastique, par le fait qu'on fait fonctionner en continu le dispositif utilisé pour former les bandes isolantes discontinues exemptes de métal (42, 43), et on forme des bandes isolantes continues (70) au voisinage des bords (60, 61) des bandes métallisées (58, 59) et à certaines distances de ces bords, jusqu'à ce qu'un nombre de couches intermédiaires, correspondant au nombre désiré de couches de recouvrement (68), soient enroulées sur le tambour, on poursuit cette opération après l'enroulement de couches de séparation, jusqu'à ce que, le nombre désiré d'enroulements soit, à nouveau, obtenu pour les couches de recouvrement (68) du condensateur mère immédiatement suivant, à la suite de quoi on forme à nouveau, sans soudure, des couches diélectriques ayant une action capacitive et comportant les bandes discontinues (42, 43).

# FIG 1

FIG 2

FIG 3